# EUROPÄISCHE PATENTSCHRIFT

(11) **EP 1 457 246 B1**
(45) Veröffentlichungstag und Bekanntmachung des Hinweises auf die Patenterteilung: **11.08.2010**
(21) Anmeldenummer: 04005687.1
(22) Anmeldetag: 10.03.2004
(51) Int. Cl.: B01D 46/24

(54) **Produktbearbeitungsvorrichtung für staubende Materialien**
Device for processing pulverous materials
Dispositif de traitement de matériaux pulvérulents

(30) Priorität: 13.03.2003 DE 10311012
(43) Veröffentlichungstag der Anmeldung: 15.09.2004
(73) Patentinhaber: DIOSNA Dierks & Söhne GmbH, 49074 Osnabrück (DE)
(72) Erfinder: Dietzmann, Werner, 49448 Brockum (DE)
(74) Vertreter: Busse & Busse

(56) Entgegenhaltungen:
- DE-A- 3 214 255
- GB-A- 2 392 855
- US-A- 3 443 696

## Beschreibung

Die Erfindung betrifft eine Produktbearbeitungsvorrichtung für staubende Materialien nach dem Oberbegriff des Patentanspruchs 1. Derartige Produktbearbeitungsvorrichtungen werden insbesondere in der erzeugenden Kunststoff-, Pharma- und Lebensmittelindustrie in Form von Mischern, Trocknern, Granulierern oder Vakuumfördergeräten verwendet.

Bei Produktbearbeitungsvorrichtungen dieser Art wird das zu bearbeitende Material in einem Bearbeitungsraum von einem Gas, zumeist Luft, durchströmt. Das Gas verläßt den Bearbeitungsraum durch einen Gasauslass. Da das Bearbeitungsmaterial staubend ist bzw. im Verlauf der Bearbeitung staubend wird, reißt das durchstömende Gas Staubpartikel mit. Dem Gasauslass ist ein Filter für Staub vorgeschaltet, um ein Entweichen der staubenden Materialien aus dem Bearbeitungsraum zu verhindern. Der Bearbeitungsraum kann auch mehrere Gasauslässe und mehrere Filter aufweisen. Dies ist insbesondere bei hohen Gasdurchsätzen erforderlich. Der Einfachheit halber wird bei der Beschreibung der Produktbearbeitungsvorrichtung jeweils nur von einem Gasauslass und einem Filter ausgegangen. Mit zunehmendem Arbeitseinsatz des Filters lagert sich immer mehr Staub auf der zum Bearbeitungsraum gerichteten Fläche des Filters ab. Um diese Staubschicht zu reduzieren, ist es bei derartigen Produktbearbeitungsvorrichtungen üblich, den Filter bei laufendem Betrieb mit dem Hauptgasstrom entgegengesetzten Druckimpulsen, insbesondere Pressluftstöße, zu beaufschlagen, wie beispielsweise aus der DE 32 14 255 A1 bekannt ist. Die Staubschicht auf der Filteraußenfläche wird dabei von der Filterinnenfläche her abgeblasen. Fester anhaftende Staubpartikel können durch dieses Vorgehen jedoch nicht von der Filteraußenfläche entfernt werden. Von Zeit zu Zeit und insbesondere bei einem Wechsel des Bearbeitungsmaterials ist daher eine intensive Reinigung, etwa eine Nassreinigung, des Filters notwendig.

Hierzu ist es bekannt, den Filter aus dem Bearbeitungsraum herauszubauen und außerhalb der Produktbearbeitungsvorrichtung zu reinigen. Nachteilig hieran ist zum einen ein hoher Kostenaufwand, der aus der Demontage und Montage des Filters und aus der langen Stillstandzeit der Vorrichtung resultiert. Zum anderen sind die Bearbeitungsmaterialien und insbesondere die Staubpartikel häufig toxikologisch nicht unbedenklich, so daß die Reinigungsarbeiten in diesen Fällen nur unter hohen Sicherheitsanforderungen durchgeführt werden können.

Aus diesen Gründen ist man dazu übergegangen, den Filter unter Verbleib in der Vorrichtung automatisch durch eine Naßreinigungseinrichtung (CIP - cleaning in place) zu säubern. Eine derartige Vorrichtung ist aus der DE 4029804 bekannt. Hierbei ist der Filter unbeweglich an einer den Bearbeitungsraum begrenzenden Wandung angeordnet. Der Filter wird knapp unterhalb der Wandung über seinen gesamten Umfang von außen radial mit einer Reinigungsflüssigkeit beaufschlagt. Dabei wird nur der oberste Bereich des Filters rundum direkt von dem Reinigungsstrahl gesäubert. Die darunter befindlichen Flächen des Filters werden lediglich durch die am Filter herunterlaufende Reinigungsflüssigkeit abgespült. In der Reinigungsflüssigkeit weniger gut lösliche Verbindungen können am Filter haften bleiben.

Eine weitere Vorrichtung dieser Art ist in der EP 0 572 356 beschrieben. Dabei ist der Filter an einem Gestänge einer Hubvorrichtung so aufgehangen, daß er von einer untersten Position in eine oberste Position, nämlich von dem Bearbeitungsraum in einen außenseitig angrenzenden Abgasraum, auf- und abwärts bewegbar angeordnet ist. In dem Abgasraum ist ein Kranz von mit Reinigungsflüssigkeit versorgbaren Düsenöffnungen vorgesehen, durch den der Filter hindurchfährt. Zusätzlich ist der Filter frei drehbeweglich, Die Düsenöffnungen sind tangential auf den Filter gerichtet und versetzen diesen in eine Drehbewegung Nachteilig ist, daß der Abgasraum groß genug zur vollständigen Aufnahme des Filters, der bis zu 1,5 m lang sein kann, ausgebildet sein muß. Hierdurch erhöht sich jedoch die Bauhöhe der Produktbearbeitungsvorrichtung. Das Austauschen von Filtern durch den Abgasraum hindurch ist schon von der Höhe des Arbeitsbereichs oft problematisch. Darüber hinausentstehen insbesondere bei den häufig verwendeten Filtern mit Sternfaltung durch die Drehbewegung des Filters in Verbindung mit den tangential angesetzten Reinigungsstrahlen Flüssigkeitsschatten in der Tiefe der Faltungen. Die Reinigungswirkung der Naßreinigung ist ungenügend.

Die Erfindung befasst sich mit dem Problem, eine Produktbearbeitungsvorrichtung der eingangs beschriebenen Art mit einer verbesserten Reinigung des Filters, einer geringeren Bauhöhe der Vorrichtung und einer möglichst einfachen Zugänglichkeit der Filter bei Wartungsarbeiten zu entwickeln.

Die Erfindung löst dieses Problem in Verbindung mit einer Vorrichtung nach dem Oberbegriff des Patentanspruchs 1 dadurch, dass der Filter in der Arbeitsstellung an einer Wandung des Bearbeitungsraums angeordnet ist und dieser gegenüber mit einer Dichtung abschließt. In seiner Reinigungsstellung ist der Filter ebenfalls im Bearbeitungsraum angeordnet und von der Wandung in den Bearbeitungsraum hinein abgesetzt, sowie mit einem Drehantrieb verbunden. Dadurch, dass der Filter während der Reinigung im Bearbeitungsraum verbleibt und nicht in den darüber befindlichen Abgasraum verschoben wird, ist ein den Filter zur Reinigung aufnehmender Abgasraum entbehrlich. Hierdurch wird der Bauaufwand und ggf. die Bauhöhe der Produktbearbeitungsvorrichtung reduziert. Häufig ist insbesondere die Bauhöhe der Vorrichtung problematisch bei großen Produktbearbeitungsvorrichtungen.

Der Filter wird während der Reinigung über einen Drehantrieb gedreht. Die Geschwindigkeit der Drehung kann dabei von dem Drehantrieb vorgegeben werden und ist unabhängig von der Intensität und dem Winkel des aus der Sprühöffnung auf den Filter treffenden Reinigungsstrahls. Der Druck, der Winkel und die Form des Reinigungsstrahls können daher den Gegebenheiten des Filters angepaßt werden. Um den Filter in seiner gesamten axialen Ausdehnung direkt bespritzen zu können, ist vorsehbar, mehrere Sprühdüsen in axialer Richtung untereinander oder eine langgestreckte Spaltdüse anzuordnen.

Alternativ kann der Filter, über ein Halteelement, z. B. eine Hubstange, mit der Produktverarbeitungsvorrichtung verbunden, in Richtung der Drehachse des Filters verfahren werden. Durch diese Anordnung kann der Filter während der Reinigung entlang einer oder mehrerer im Bearbeitungsraum befindlicher Sprühöffnungen bewegt und dabei gleichzeitig über den Drehantrieb gedreht werden. Eine einzige im Bearbeitungsraum angeordnete Sprühöffnung kann damit ausreichen, fortschreitend die gesamte Oberfläche der Filteraußenseite direkt mit Reinigungsflüssigkeit zu beaufschlagen. Ein weiterer Vorteil besteht darin, daß der Filter, der häufig an der oben befindlichen Deckenwandung des Bearbeitungsraumes angeordnet ist, nach unten absenkbar und bei geöffnetem Bearbeitungsraum leicht zugänglich ist. In dieser Stellung ist eine einfache und schnelle Sauberkeitsprüfung visueller Art oder auch durch spezielle Reinheitstests möglich. Da der Filter vorzugsweise lösbar an dem Halteelement angeordnet ist, ist ein schneller Ausbau des Filters zum Austausch oder externen Reinigen möglich.

Eine mögliche Ausgestaltung der Verbindung sieht vor, daß Sprühöffnungen so angeordnet sind, daß damit mehrere Filter und/oder der übrige Bearbeitungsraum gereinigt werden. Die Sprühöffnungen bzw. die Sprühköpfe können dabei direkt an oder in der Wandung oder aber innerhalb des Bearbeitungsraums angeordnet sein. Je nach Form des Bearbeitungsraums und Anordnung des oder der Filter kann die Position und die Anzahl der Sprühöffnungen variieren.

Der Sprühkopf kann um eine oder mehrere Achsen schwenkbar sein. Hierdurch wird erreicht, daß die Sprühöffnung am Sprühkopf einen wesentlich größeren Bereich des Bearbeitungsraumes und des Filters, insbesondere wenn dieser nicht in Richtung der Drehachse des Filters verfahrbar ist, direkt mit Reinigungsflüssigkeit beaufschlagt werden kann. Dem gleichen Zweck kann bei einer bevorzugten Ausführungsform der Erfindung ein parallel zur der Drehachse des Filters verschiebbares Befestigungselement dienen, an dem der Sprühkopf angeordnet ist. Der Sprühkopf kann dann während der Reinigung längs des sich drehenden Filters geführt werden, so daß der aus der Sprühöffnung des Sprühkopfes stammende Reinigungsstrahl die gesamte Außenfläche des Filters direkt bespritzen kann.

Der Sprühkopf kann aus dem Inneren des Bearbeitungsraum heraus in einenvorzugsweise geschützten Aufbewahrungsbereich bewegbar sein. Hierdurch ist die Sprühöffnung an dem Sprühkopf vor Verschmutzung durch Bearbeitungsmaterial geschützt.

Zweckmäßig ist der Sprühkopf austauschbar angeordnet. Hierdurch können der jeweiligen Reinigungssituation angepaßte Sprühköpfe bzw. Sprühöffnungen verwendet werden. Dabei sollen insbesondere kommerziell erhältliche Spezialsprühköpfe verwendet werden.

Weitere Einzelheiten und Vorteile der Erfindung ergeben sich aus den Unteransprüchen und in der Zeichnung schematisch dargestellten Ausführungsbeispielen, die im folgenden beschrieben werden; es zeigen:
- Fig. 1: Teil der Produktbearbeitungsvorrichtung in geschnittener Seitenansicht und
- Fig. 2: Ausschnitt aus Fig.1 jedoch mit einer anderen Filterposition in geschnittener Darstellung.

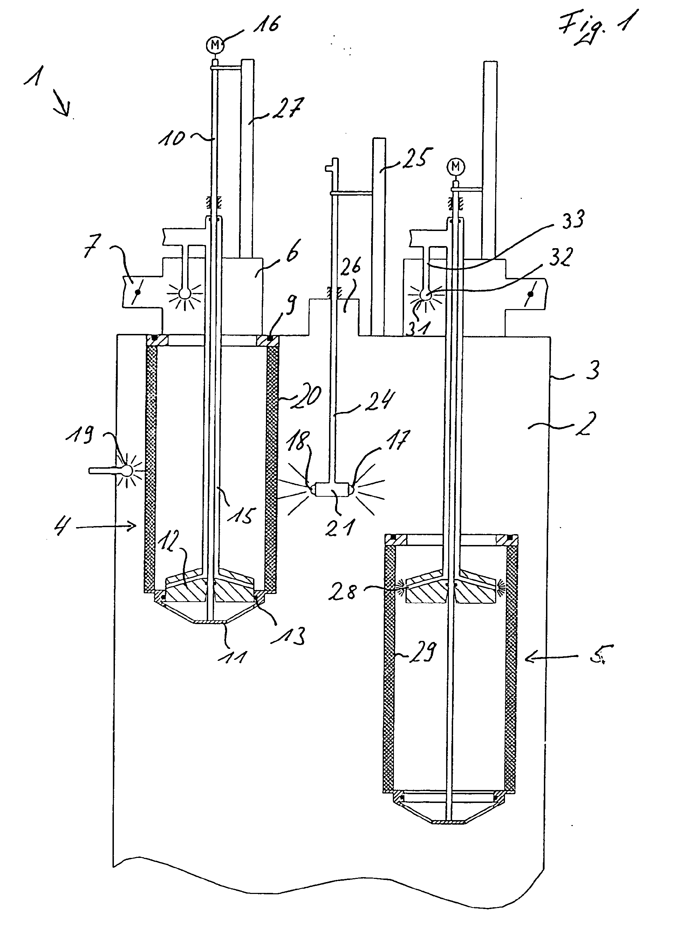

Fig. 1 zeigt einen Teil der Produktbearbeitungsvorrichtung 1 in geschnittener Seitenansicht. In einem Bearbeitungsraum 2, der von einer Wandung 3 umschlossen ist, sind zwei Filter 4 und 5 angeordnet. Der linke Filter 4 befindet sich in einer Arbeitsstellung. In dieser Position ist der Filter 4 unterhalb eines Filterkopfes 6, der einem Gasauslass 7 vorgelagert ist, unmittelbar an der Wandung 3 angeordnet. Eine Dichtung 9 im oberen Bereich des Filters 4 verhindert, daß ein Gas oder Bearbeitungsmaterial zwischen der Wandung 3 und dem Filter 4 hindurch in den Filterkopf 6 gelangt. Der Filter 4 hat im Längsschnitt eine schlauchartige Form und ist jeweils an seinen Enden offen. Häufig werden Filter 4 mit im Querschnitt sternförmig gefalteter Form verwendet. Der Filter 4 ist über ein Halteelement 10, das an einem Halterungsbereich 11 des Filters 4 angeordnet ist, mit der Produktbearbeitungsvorrichtung 1 verbunden.

Ein von dem Filter 4 separater Filterboden 12 verschließt das Innere des Filters 4 in Verbindung mit einer am Filter 4 angeordneten unteren Dichtung 13. Der Filterboden 12 ist vorzugsweise lösbar an einer Filterbodenhalterung 15 angeordnet, die wiederum vorzugsweise lösbar mit der Produktbearbeitungsvorrichtung 1 verbunden ist. Durch die lösbare Anordnung des Filterbodens 12 und der Filterbodenhalterung 15 können diese zur Reinigung oder Wartung leicht nach unten hin ausgebaut werden.

Das Halteelement 10 ist mit einem Drehantrieb 16 verbunden, so daß der Filter 4 in einer Reinigungsstellung drehbar ist. Die Filterbodenhalterung 15 und das Halteelement 10 sind zweckmäßig in der Mitte des Querschnitts des Filters 4 angeordnet. Dies wird in Fig. 1 dadurch erreicht, daß das Halteelement, z. B. eine Hubstange, zentral in der Filterbodenhalterung 15, z. B. einem Rohr, geführt wird. Hierdurch sind der Filter 4 und der Filterboden 12 jeweils zentrisch aufgehängt.

Aus Sprühöffnungen 17, 18 und 19, die im Bearbeitungsraum 1 (17 und 18) oder an der Wandung 3 (19) angeordnet sein können, spritzt Reinigungsflüssigkeit auf eine Filteraußenseite 20 des Filters 4. Die Sprühöffnungen 17 und 18 sind Teil eines Sprühkopfes 21. Der Sprühkopf 21 ist an einem Befestigungselement 24 lösbar angeordnet. Der Sprühkopf 21 wird über das Befestigungselement 24, das als Zuleitungsrohr ausgebildet sein kann, mit der Reinigungsflüssigkeit versorgt. Zudem ist das Befestigungselement 24 mit einer Hubeinrichtung 25 verbunden und kann in Richtung der Drehachse des Filters 4 entlang der Filteraußenseite 20 verschoben werden. Während der Arbeitsphase der Produktbearbeitungsvorrichtung 1 kann der Sprühkopf 21 in einen geschützten Aufbewahrungsbereich 26 zurückgezogen werden. Der Sprühkopf 21 ist um eine oder mehrere Achsen gesteuert schwenkbar. Anlenkung, Steuerung und Antrieb hierfür sind handelsüblich erhältlich und zeichnerisch nicht wiedergegeben. Hierdurch und insbesondere in Verbindung mit der Hubeinrichtung 25 kann Reinigungsflüssigkeit aus den Sprühöffnungen 17 und 18 direkt auf jede Stelle der Filteraußenseite 20 des sich drehenden Filters 4 gespritzt werden. Mit Hilfe eines derart beweglichen Sprühkopfes 21 kann nicht nur der Filter 4, sondern auch die Wandung 3 des Bearbeitungsraumes 2 gereinigt werden.

Das Halteelement 10 ist mit einer Hubvorrichtung 27 verbunden und kann mit deren Hilfe in Richtung der Drehachse des Filters 4 in eine Reinigungsstellung, in Fig. 1 durch den rechten Filter 5 dargestellt, verschoben werden. Alternativ zu der hier dargestellten Zeichnung, kann der Filter 5 auch in der Reinigungsstellung ähnlich dem dargestelltem Filter 4 an der Wandung 3 angeordnet sein. Die Dichtungen 9 und 13 des Filters 5 sind dann zweckmäßig als bewegte Dichtungen ausgebildet. Hierdurch ist die Drehbarkeit des Filters 5 auch in einer an der Wandung 3 angeordneten Position des Filters 5 gegeben.

Während der Bewegung des Filters 5 von der Wandung 3 weg wird der sich über den Drehantrieb 16 drehende Filter 5 entlang dem Sprühkopf 21 geführt. Aus den Sprühöffnungen 17 und 18 des Sprühkopfes 21 oder aus der Sprühöffnung 19 auf den Filter 5 gespritzte Reinigungsflüssigkeit erreicht so direkt jede Stelle der Filteraußenseite 20 und zwar unter einem vorgebbaren Winkel. Das Entfernen auch reinigungsflüssigkeitsunlöslicher Partikel von der Filteraußenseite 20 durch den Strahlungsdruck des Reinigungsstrahles ist damit gewährleistet.

Der Filterboden 12 weist Filterbodensprühöffnungen 28 auf, die über die Filterbodenhalterung 15 mit dem Sprühmedium, insbesondere der Reinigungsflüssigkeit, versorgt werden. Aus den Filterbodensprühöffnungen 28 ist Reinigungsflüssigkeit auf die Filterinnenseite 29 spritzbar. Durch die Drehbewegung des Filters 5 bei gleichzeitiger Bewegung in Richtung der Drehachse ist jede Stelle der Filterinnenseite 29 direkt mit Reinigungsflüssigkeit aus den Filterbodensprühöffnungen 28 beaufschlagbar.

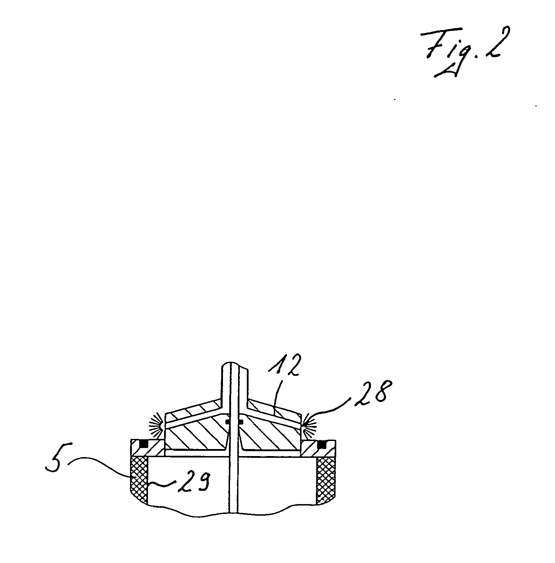

In der in Fig. 2 dargestellten Position des Filters 5 ist dieser aus dem Sprühbereich des Sprühkopfes 21 weitgehend herausgefahren. In dieser Position kann der Sprühkopf 21 die Bereiche der Wandung 3 säubern, die zuvor von dem Filtern 5 verdeckt wurden. Gleichzeitig verschließt der Filterboden 12 den Filter 5 nach oben und schützt so die Filterinnenseite 29 vor Verunreinigungen während der Reinigung der Wandung 3 des Bearbeitungsraumes.

Die Filterbodensprühöffnungen 28 sind über die Filterbodenhalterung 15 nicht nur mit Reinigungsflüssigkeit, sondern zudem auch mit Gas, insbesondere Luft, versorgbar. Hierdurch kann der Filter 5 nach der Reinigung schnell getrocknet werden. Der in Fig. 1 dargestellte Halterungsbereich 11 ist nach unten hin offen, so daß aus den Filterbodensprühöffnungen 28 auf die Filterinnenseite 29 gespritzte Reinigungsflüssigkeit nach unten hin auslaufen kann.

Im Filterkopf 6 ist eine Filterkopfsprühöffnung 31 angeordnet. Diese wiederum kann, wie die Sprühöffnungen 17, 18 und 19, an einem austauschbaren und um ein oder mehrere Achsen schwenkbaren Filterkopfsprühkopf 32 angeordnet sein, der wiederum mit einem Filterkopfbefestigungselement 33 verbunden und über diesen mit Reinigungsflüssigkeit versorgbar ist.

In der Arbeitsstellung ist der Filter 4 von der Filterinnenseite 29 über den Gasauslass 7 mit einem kurzen Gasdruck, insbesondere Preßluft, beaufschlagbar.

## Patentansprüche

1. Produktionsbearbeitungsvorrichtung (1) für staubende Materialien, insbesondere Mischer, Trockner, Granulierer oder Vakuumfördergeräte, mit einem gasdurchströmten Bearbeitungsraum (2) und zumindest einem in einer Arbeitsstellung innerhalb des Bearbeitungsraums (2) angeordneten und einem Gasauslass (7) vorgeschalteten Filter (4, 5) für Staub sowie mit einer Naßreinigungseinrichtung für den Filter (4, 5), wobei die Naßreinigungseinrichtung außerhalb des Filters (4, 5) zumindest eine auf den Filter (4, 5) zu richtende Sprühöffnung (17, 18, 19) für Reinigungsflüssigkeit aufweist und wobei der Filter (4, 5) zumindest in einer Reinigungsstellung drehbar angeordnet ist, **dadurch gekennzeichnet, dass** der Filter (4, 5) in der Arbeitsstellung an einer Wandung (3) des Bearbeitungsraums (2) angeordnet ist und dieser gegenüber mit einer Dichtung (9) abschließt und in seiner Reiningungsstellung ebenfalls im Bearbeitungsraum (2) angeordnet ist und von der Wandung (3) in den Bearbeitungsraum (2) hinein abgesetzt ist sowie mit einem Drehantrieb (16) verbunden ist.

2. Produktbearbeitungsvorrichtung (1) nach Anspruche 1, **dadurch gekennzeichnet, dass** der Filter (4, 5) mit der Produktbearbeitungsvorrichtung (1) über ein Halteelement (10) verbunden ist, das in Richtung einer Drehachse des Filters (4, 5) verfahrbar und mit dem Drehantrieb (16) verbunden ist.

3. Produktbearbeitungsvorrichtung (1) nach Anspruch 2, **dadurch gekennzeichnet, dass** der Filter (4, 5) lösbar an dem Halteelement (10) angeordnet ist.

4. Produktbearbeitungsvorrichtung (1) nach einem der Ansprüche 1 bis 3, **dadurch gekennzeichnet, dass** der Filter (4, 5) in der Arbeitsstellung durch einen Filterboden (12) abgeschlossen ist, der mit einer an der Produktbearbeitungsvorrichtung (1) angeordneten Filterbodenhalterung (15) verbunden ist.

5. Produktbearbeitungsvorrichtung (1) nach einem der Ansprüche 2 oder 3 und Anspruch 6, **dadurch gekennzeichnet, dass** das Halteelement (10) zumindest bereichsweise innerhalb der Filterbodenhalterung (15) angeordnet ist.

6. Produktbearbeitungsvorrichtung (1) nach einem der Ansprüche 1 bis 5, **dadurch gekennzeichnet, dass** zumindest eine Sprühöffnung (17, 18, 19) an einem Sprühkopf (21) angeordnet ist.

7. Produktbearbeitungsvorrichtung (1) nach Anspruch 6, **dadurch gekennzeichnet, dass** der Sprühkopf (21) wenigstens einachsig schwenkbar ist.

8. Produktbearbeitungsvorrichtung (1) nach einem der Ansprüche 6 oder 7, **dadurch gekennzeichnet, dass** der Sprühkopf (21) an einem in Richtung der Drehachse verschiebbaren Befestigungselement (24) angeordnet ist.

9. Produktbearbeitungsvorrichtung (1) nach einem der Ansprüche 6 bis 8, **dadurch gekennzeichnet, dass** zumindest ein Sprühkopf (21) aus dem Bearbeitungsraum (2) heraus in einen Aufbewahrungsbereich (26) bewegbar ist.

10. Produktbearbeitungsvorrichtung (1) nach einem der Ansprüche 6 bis 9, **dadurch gekennzeichnet, dass** der Sprühkopf (21) austauschbar ist.

11. Produktbearbeitungsvorrichtung nach einem der Ansprüche 4 bis 10, **dadurch gekennzeichnet, dass** im Filterboden (12) wenigstens eine in der Reinigungsstellung auf eine Filterinnenseite (29) richtbare und in der Arbeitsstellung verdeckte mit einem Sprühmedium versorgbare Filterbodensprühöffnung (28) angeordnet ist.

## Claims

1. Product processing apparatus (1) for dust-generating materials, and in particular mixers, dryers, granulators or vacuum feeding equipment, having a processing space (2) through which gas flows and at least one filter (4, 5) for dust which, in a working position, is arranged within the processing space (2) and is inserted upstream of a gas outlet, and having a wet cleaning arrangement for the filter (4, 5), the wet cleaning arrangement having, outside the filter (4, 5), at least one spray opening (17, 18, 19), for cleaning liquid, which is to be directed towards the filter (4, 5) and the filter (4, 5) being arranged to be rotatable at least in a position for cleaning, **characterised in that**, in the working position, the filter (4, 5) is arranged against a wall (3) of the processing space (2) and is closed off from the wall (3) by a seal (9) and in its cleaning position is also arranged in the processing space (2) and is positioned away from the wall (3) and into the processing space (2) and is connected to a rotary drive (16).

2. Product processing apparatus (1) according to claim 1, **characterised in that** the filter (4, 5) is connected to the product processing apparatus (1) by means of a supporting member (10) which can be displaced in the direction defined by an axis of rotation of the filter (4, 5) and which is connected to the rotary drive (16).

3. Product processing apparatus (1) according to claim 2, **characterised in that** the filter (4, 5) is detachably arranged on the supporting member (10).

4. Product processing apparatus (1) according to one of claims 1 to 3, **characterised in that**, in the working position, the filter (4, 5) is closed off by a filter floor-member (12) which is connected to a filter floor-member mounting (15) which is arranged on the product processing apparatus (1).

5. Product processing apparatus (1) according to either of claims 2 and 3 and claim 6, **characterised in that** at least a region or regions of the supporting member (10) is/are arranged inside the filter floor-member mounting (15).

6. Product processing apparatus (1) according to one of claims 1 to 5, **characterised in that** at least one spray opening (17, 18, 19) is arranged in a spray head (21).

7. Product processing apparatus (1) according to claim 6, **characterised in that** the spray head (21) can be pivoted on at least one axis.

8. Product processing apparatus (1) according to either of claims 6 and 7, **characterised in that** the spray head (21) is arranged on a fastening member (24) which can be displaced in the direction defined by the axis of rotation.

9. Product processing apparatus (1) according to one of claims 6 to 8, **characterised in that** at least one spray head (21) can be moved out of the processing space (2) and into a sheltering region (26).

10. Product processing apparatus (1) according to one of claims 6 to 9, **characterised in that** the spray head (21) is exchangeable.

11. Product processing apparatus according to one of claims 4 to 10, **characterised in that** there is arranged in the filter floor-member (12) at least one spray opening (28) which can be supplied with a medium for spraying and which can be directed towards an inside face (29) of the filter in the cleaning position and is concealed in the working position.

## Revendications

1. Dispositif de traitement de production (1) pour des matériaux pulvérulents, en particulier mélangeur, sécheur, granulateur ou appareils de transport sous vide, avec un espace de traitement (2) parcouru par le gaz et au moins un filtre (4, 5) à poussière disposé dans une position de travail dans l'espace de traitement (2) et monté en amont d'une sortie de gaz (7) ainsi qu'avec un dispositif de nettoyage par voie humide pour le filtre (4, 5), le dispositif de nettoyage par voie humide présentant en dehors du filtre (4, 5) au moins une ouverture de pulvérisation (17, 18, 19) à diriger sur le filtre (4, 5) pour le liquide de nettoyage et le filtre (4, 5) étant disposé de manière rotative au moins dans une position de nettoyage, **caractérisé en ce que** le filtre (4, 5) est disposé en position de travail sur une paroi (3) de l'espace de traitement (2) et se termine par rapport à celui-ci avec une garniture (9) et est aussi disposé dans sa position de nettoyage dans l'espace de traitement (2) et est décalé de la paroi (3) dans l'espace de traitement (2) ainsi qu'est relié à un entraînement rotatif (16).

2. Dispositif de traitement de production (1) selon la revendication 1, **caractérisé en ce que** le filtre (4, 5) est relié au dispositif de traitement de production (1) via un élément de retenue (10) qui peut être déplacé en direction d'un axe de rotation du filtre (4, 5) et est relié à l'entraînement rotatif (16).

3. Dispositif de traitement de production (1) selon la revendication 2, **caractérisé en ce que** le filtre (4, 5) est disposé de manière amovible sur l'élément de retenue (10).

4. Dispositif de traitement de production (1) selon l'une quelconque des revendications 1 à 3, **caractérisé en ce que** le filtre (4, 5) est fermé en position de travail par un fond de filtre (12) qui est relié à un support de fond de filtre (15) disposé sur le dispositif de traitement de production (1).

5. Dispositif de traitement de production (1) selon l'une quelconque des revendications 2 ou 3 et la revendication 4, **caractérisé en ce que** l'élément de retenue (10) est disposé au moins par endroits dans le support de fond de filtre (15).

6. Dispositif de traitement de production (1) selon l'une quelconque des revendications 1 à 5, **caractérisé en ce qu'**au moins une ouverture de pulvérisation (17, 18, 19) est disposée sur une tête de pulvérisation (21).

7. Dispositif de traitement de production (1) selon la revendication 6, **caractérisé en ce que** la tête de pulvérisation (21) peut être pivotée au moins autour d'un axe.

8. Dispositif de traitement de production (1) selon l'une quelconque des revendications 6 ou 7, **caractérisé en ce que** la tête de pulvérisation (21) est disposée sur un élément de fixation (24) mobile en direction de l'axe de rotation.

9. Dispositif de traitement de production (1) selon l'une quelconque des revendications 6 à 8, **caractérisé en ce qu'**au moins une tête de pulvérisation (21) peut être déplacée hors de l'espace de traitement (2) dans une zone de conservation (26).

10. Dispositif de traitement de production (1) selon l'une quelconque des revendications 6 à 9, **caractérisé en ce que** la tête de pulvérisation (21) est interchangeable.

11. Dispositif de traitement de production selon l'une quelconque des revendications 4 à 10, **caractérisé en ce qu'**au moins une ouverture de pulvérisation de fond de filtre (28) pouvant être alimentée en un moyen de pulvérisation, pouvant être dirigée en position de nettoyage sur un côté intérieur du filtre (29) et recouverte en position de travail est disposée dans le fond de filtre (12).
